# FASCICULE DE BREVET EUROPEEN

(11) **EP 2 905 444 B1**
(45) Date de publication et mention de la délivrance du brevet: **24.08.2016**
(21) Numéro de dépôt: 15151569.9
(22) Date de dépôt: 19.01.2015
(51) Int. Cl.: F02B 37/18, F02B 37/24, F02B 39/16

(54) **Ensemble d'électrovanne à double découplage**
Magnetventilanordnung mit doppelter Entkopplung
Solenoid valve assembly with dual disconnection

(30) Priorité: 10.02.2014 FR 1450984
(43) Date de publication de la demande: 12.08.2015
(73) Titulaire: PEUGEOT CITROËN AUTOMOBILES SA, 78140 Vélizy-Villacoublay (FR)
(72) Inventeur: Jullian, Maxime, 92120 Montrouge (FR)

(56) Documents cités:
- EP-A2- 2 472 122
- DE-A1-102005 040 590
- JP-A- H05 156 957
- US-A1- 2013 049 502

## Description

### Domaine technique de l'invention

La présente invention est du domaine de l'amortissement des vibrations. L'invention concerne plus particulièrement un ensemble comprenant un dispositif à double découplage de vibrations. L'invention concerne aussi un ensemble moteur comprenant un tel ensemble d'électrovanne.

### Arrière-plan technologique

Le fonctionnement d'un moteur, par exemple un moteur à combustion interne, est générateur de vibrations. Par ailleurs, le fonctionnement d'un moteur est aussi dépendant du bon pilotage d'actionneurs. Un actionneur est classiquement commandé par une électrovanne pneumatique. Or, L'électrovanne étant reliée au moteur, sous l'action des vibrations, on observe des défaillances de fonctionnement d'actionneur dues à la mise en résonance de l'électrovanne.

JP H05 156957 A décrit l'amortissement des vibrations d'une électrovanne pneumatique pour permettre la dérivation de l'air comprimé d'un turbocompresseur. L'actionneur pneumatique contient un cylindre avec un piston positionné à l'intérieurement du corps de l'actionneur, qui fonctionne comme un amortisseur.

Une solution d'amortissement connue est de relier l'électrovanne au moteur par l'intermédiaire d'une pièce constituée d'un matériau souple permettant d'absorber des chocs et des vibrations entre l'électrovanne et le moteur. Cependant, une telle électrovanne sans lubrifiant interne génère des frottements qui a terme provoque de l'usure et/ou un ralentissement de la dynamique des mouvements transitoires.

Une autre solution d'amortissement est d'utiliser une électrovanne comprenant un fluide viscoélastique interne destiné à filtrer les vibrations subies par la tige de commande de l'électrovanne. Cependant, de telles électrovannes ont un temps de réponse trop long par rapport au besoin dynamique de pilotage de l'actionneur en raison de la viscosité du fluide viscoélastique interne.

Par conséquent, le but de l'invention est de résoudre les inconvénients précédemment cités, et de proposer un dispositif qui permet d'absorber efficacement les vibrations du moteur tout en conservant un temps de réponse rapide d'électrovanne.

Pour atteindre cet objectif, il est prévu selon l'invention un ensemble d'électrovanne destiné à être fixé à un ensemble comprenant un moteur, l'ensemble d'électrovanne comprenant :
- une électrovanne pneumatique comprenant un corps, une entrée destinée à être reliée à une pression d'alimentation, une sortie destinée à fournir une pression de commande et un actionneur permettant le contrôle de la pression de commande,
- des premiers moyens d'amortissement des vibrations produites par le moteur lors de son fonctionnement, disposés extérieurement au corps de l'électrovanne, les premiers moyens d'amortissement étant destinés à relier le corps de l'électrovanne au moteur, caractérisé en ce que l'électrovanne comprend des seconds moyens d'amortissement disposés intérieurement au corps de l'électrovanne, les premiers et seconds moyens d'amortissement étant conçus de sorte qu'ils forment un dispositif de double découplage des vibrations entre le moteur et l'actionneur.

Grâce à ce dispositif de double découplage l'isolation vibratoire de l'actionneur de l'électrovanne est améliorée, ce qui permet un meilleur contrôle de son positionnement au final un pilotage plus fin et dynamique de la pression de commande.

De préférence, les premiers moyens d'amortissement comprennent un matériau élastique. Ce qui constitue un moyen simple, efficace d'isolation des vibrations avec une tenue mécanique adéquate pour le maintien de l'électrovanne.

De préférence encore, matériau élastique présente une raideur comprise entre 1 kN/mm et 100 kN/mm.

Dans une variante, les seconds moyens de découplage comprennent un cylindre, un piston apte à coulisser dans le cylindre et baignant dans un fluide viscoélastique.

De préférence, le fluide viscoélastique présente une viscosité cinématique comprise entre 100 centistokes et 1000 centistokes à 20°C et une viscosité cinématique comprise 5 centistokes et 100 centistokes à 130°C, ce qui le rend adapté aux contraintes thermique d'un environnement moteur.

De préférence encore, le fluide viscoélastique comprend un polymère de viscosité destiné à faire chuter, pour un taux de cisaillement déterminé, la viscosité dynamique du fluide viscoélastique, ce qui permet de relâcher la viscosité donc les frottements sur l'actionneur d'électrovanne et améliore sa dynamique quand celui-ci a besoin d'une dynamique rapide.

De préférence encore, le polymère de viscosité est choisi de sorte que le fluide viscoélastique présente une chute de viscosité dynamique pour un taux de cisaillement compris entre 10⁴ et 10⁶ s-1.
Dans une variante, le cisaillement du fluide viscoélastique est provoqué au niveau d'un jeu de fonctionnement entre le piston et le cylindre.

L'invention a aussi pour objet un ensemble moteur comprenant un moteur et un ensemble d'électrovanne selon l'une quelconque des variantes précédemment décrites.

De préférence, dans une variante où l'ensemble moteur comprend un turbocompresseur à géométrie variable comprenant des aubes ajustables, l'ensemble d'électrovanne est destiné à piloter les aubes ajustables.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est une représentation schématique d'un mode de réalisation d'un ensemble moteur conforme à l'invention.
- La figure 2 est un schéma de principe du double découplage.
- La figure 3 est un graphique d'évolution de viscosité cinématique en fonction de la température.
- La figure 4 est un graphique d'évolution de viscosité dynamique en fonction du taux de cisaillement du fluide viscoélastique comprenant un élastomère de viscosité.

### Description détaillée

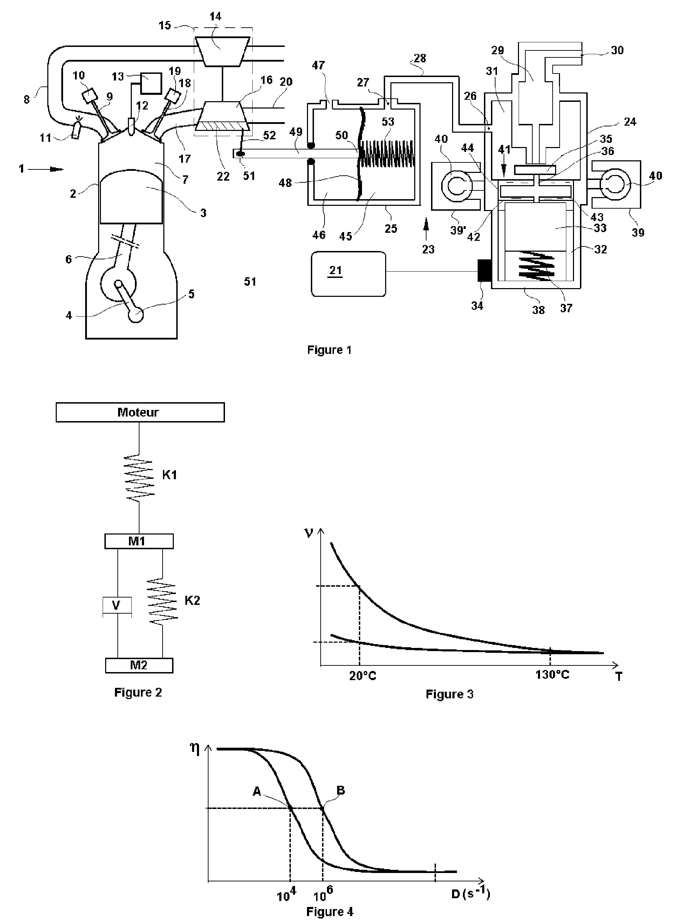

La figure 1 représente schématiquement un mode de réalisation d'un ensemble moteur conforme à l'invention. Sur la figure 1, l'ensemble moteur comprend un moteur 1 à combustion interne pouvant par exemple équiper un véhicule automobile, non représenté, tel qu'une voiture.

Le moteur 1 est équipé de plusieurs cylindres. Toutefois, pour simplifier l'illustration, seul un cylindre 2 de ce moteur à combustion interne est représenté sur la figure 1. A l'intérieur du cylindre 2, un piston 3 est monté déplaçable en translation entre un point mort haut (PMH) et un point mort bas (PMB). Ce piston 3 entraîne en rotation une manivelle 4 d'un vilebrequin 5 par l'intermédiaire d'une bielle 6. Le vilebrequin 5 entraîne en rotation, par l'intermédiaire d'un mécanisme non représenté, les roues motrices, non représentée, du véhicule.

Le cylindre 2 définit une chambre de combustion 7 délimitée par la partie supérieure du piston 3 et une culasse non représentée. Un conduit 8 d'admission d'air frais débouche dans la chambre 8 par l'intermédiaire d'une ouverture d'admission. Une soupape 9 d'admission est déplaçable entre une position fermée dans laquelle elle ferme de façon étanche à l'air frais l'ouverture d'admission, et une position ouverte dans laquelle l'air frais peut être admis à l'intérieur de la chambre 7 par l'intermédiaire de l'ouverture d'admission. La soupape 9 est déplacée entre sa position ouverte et sa position fermée par un actionneur 10 de soupapes d'admission.

Comme représenté sur la figure 1, le moteur 1 peut être est à injection indirecte de carburant, autrement dit un injecteur 11 de carburant est prévu dans le conduit 8 pour injecter le carburant dans l'air frais admis à l'intérieur de la chambre 7. Une bougie 12 propre à allumer le mélange air frais/carburant débouche dans la chambre 8. Cette bougie est commandée par un dispositif d'allumage 13.

En variante, le moteur à combustion interne peut cependant être à injection directe essence, c'est-à-dire avec l'injecteur de carburant implanté de sorte à injecter directement le carburant dans la chambre de combustion. En variante encore, le moteur à combustion interne peut encore être du type à allumage par compression.

Le conduit 8 est raccordé à un compresseur 14 de turbocompresseur 15 propre à comprimer l'air frais admis à l'intérieur de la chambre 7.

Un conduit 17 d'échappement débouche également à l'intérieur de la chambre 7 par l'intermédiaire d'une ouverture d'échappement. Cette ouverture d'échappement est obturable par une soupape 18 d'échappement déplaçable entre une position fermée, et une position ouverte dans laquelle les gaz brûlés contenus à l'intérieur de la chambre 7 peuvent s'échapper par l'intermédiaire du conduit 17. Cette soupape 18 est déplacée entre ces positions ouverte et fermée par un actionneur de soupapes 19.

Les actionneurs de soupapes 10 et 19 peuvent être des actionneurs de soupapes mécaniques.

Le conduit 17 d'échappement est raccordé à une turbine 16 du turbocompresseur 15. Cette turbine 16 permet notamment de détendre les gaz d'échappement avant de les envoyer dans une ligne d'échappement 20. Dans un turbocompresseur 15 dit à géométrie variable, la turbine 16 comprend des aubes 22 ajustables de sorte à obtenir une pression de charge élevée à bas régime moteur.

Les différents équipements du moteur susceptibles d'être commandés tels que les actionneurs 10, 19, le dispositif d'allumage 13 ou encore l'injecteur 11 de carburant sont raccordés à une unité 21 de commande du moteur ou calculateur. Pour simplifier la figure 1, les connexions entre cette unité 21 et les différents équipements commandés n'ont pas été représentées.

L'ajustement des aubes 22 est réalisé au moyen d'un actionneur électropneumatique 23. L'actionneur électropneumatique 23, représenté schématiquement et en coupe sur la figure 1, est composé d'une électrovanne pneumatique 24 et d'une capsule pneumatique de commande 25, la sortie 26 de l'électrovanne 24 étant reliée à l'entrée 27 de la capsule par une canalisation 28.

La capsule 25 est composée de deux chambres: une première chambre 45 communiquant avec la chambre de sortie 31 de l'électrovanne 24 par la canalisation 28 et une seconde chambre 46 ayant un passage 47 communiquant avec l'extérieur. La pression de la première chambre 45 correspond à celle de la chambre de sortie 31 et la seconde chambre 46 est à la pression extérieure, qui est voisine de la pression atmosphérique ou égale à cette pression. Les deux chambres 45 et 46 sont séparées par une membrane souple 48. Une tige de commande 49 a une extrémité 50 solidaire de la membrane 48, son autre extrémité 51 étant reliée à une tringlerie 52 de commande des aubes 22 ajustables de la turbine 16. Un ressort 53 de rappel de la tige 49 de commande tend à pousser la tige de commande 49 vers l'extérieur de la capsule 25.

En variante, l'électrovanne 24 pourrait piloter un autre organe moteur que le turbocompresseur, par exemple une vanne EGR.

L'électrovanne 24 comporte :
- une chambre à vide 29 dont l'entrée 30 est destinée à être reliée à une pression d'alimentation au moyen d'une pompe à vide (non représentée), une chambre de sortie 31 débouchant sur la sortie 26 destinée à fournir la pression de commande de la capsule pneumatique 25.
- un actionneur permettant le contrôle de la pression de commande dans la chambre de sortie 31. L'actionneur comporte :
   - un clapet 35 séparant la chambre à vide 29 de la chambre de sortie 31,
   - un circuit magnétique comprenant un solénoïde 32 entourant un noyau magnétique mobile 33,
   - le noyau magnétique mobile 33 est relié au clapet 35 au moyen d'un axe 36 rigide permettant la transmission du mouvement du noyau 33 au clapet 35.
   - un ressort de compression 37 est interposé entre le corps 38 de l'électrovanne 24 et le noyau 33.

L'électrovanne 24 comporte encore une connexion électrique 34 destinée à recevoir un signal électrique de commande du solénoïde 32. Le signal électrique de commande est émis par l'unité 21 de commande.

Lorsque le solénoïde n'est pas sollicité électriquement, le ressort de compression 37 assure la fermeture de la chambre à vide 29 au moyen du clapet. Lorsque le solénoïde est sollicité électriquement une force magnétique déplace le noyau mobile 33, comprime le ressort 37, ce qui déplace le clapet et ouvre la chambre à vide 29.

Afin d'isoler l'électrovanne 24 des vibrations produites par le moteur 1 lors de son fonctionnement, il est prévu des premiers moyens d'amortissement 39, 39' disposés extérieurement au corps 38 de l'électrovanne 24 et reliant le corps 38 de l'électrovanne au moteur 1 (liaison non représentée). Ces premiers moyens d'amortissement 39, 39' sont destinés à découpler la transmission des vibrations du moteur 1 au corps 38 de l'électrovanne 24.

Ces premiers moyens d'amortissement 39, 39' comprennent un matériau élastique, tel qu'un élastomère élastique 40, disposé entre le moteur et le corps 38 de l'électrovanne 24. Avantageusement, le matériau élastique a une raideur comprise entre 1 kN/mm et 100 kN/mm, ce qui permet de découpler les vibrations caractéristiques d'un moteur.

Afin d'isoler l'actionneur de l'électrovanne 24 des vibrations résiduelles transmises du corps 38, il est prévu des second moyens d'amortissement 41 disposés intérieurement au corps 38 de l'électrovanne 24.

Les seconds moyens d'amortissement 41 comporte un cylindre 42 ici interposé entre le clapet 35 et le noyau mobile 33 et enveloppant l'axe 36. Le cylindre 42 comprend un fluide viscoélastique dans lequel baigne un piston 43 solidaire de l'axe 36. Le piston 43 coulisse dans le cylindre 42 avec un jeu de fonctionnement calibré 44.

On forme ainsi un dispositif de double découplage dont le principe est illustré en figure 2. En référence à la figure 2, le moteur est d'abord découplé de la masse M1 du corps 38 de l'électrovanne 24 au moyen de la raideur K1 des premiers moyens d'amortissement 39, 39' tandis que la masse M1 du corps 38 de l'électrovanne 24 est ensuite découplée de la masse M2 de l'actionneur de l'électrovanne 24 au moyen de la raideur K2 du ressort 37 et en parallèle de l'amortissement visqueux V des seconds moyens d'amortissement 41.

Comme le montre la figure 3, la viscosité cinématique ν évolue en fonction de la température. Dans notre application, la viscosité du fluide viscoélastique est optimisée en fonction de la température pour ne pas perdre en durabilité à chaud.

Le fluide viscoélastique choisi est un lubrifiant répondant à la norme SAE J300. De préférence, le fluide viscoélastique est choisi avec une viscosité cinématique ν comprise entre 100 centistokes et 1000 centistokes à 20°C et une viscosité cinématique comprise 5 centistokes et 100 centistokes à 130°C.

Afin de gagner en réactivité à froid un polymère de viscosité il est prévu d'introduire dans le fluide viscoélastique. Un tel polymère est par exemple un polybutène, un polyméthacrylate, un polyacrylate ou encore un polymère d'oléfines.

Au cours du coulissement du piston 43 le fluide viscoélastique présent dans le jeu 44 subit des contraintes de cisaillement. Comme le montre la figure 4, la viscosité dynamique η du fluide viscoélastique comprenant un tel polymère de viscosité évolue en fonction du taux de cisaillement D, et on observe une chute brutale de viscosité autour d'un taux de cisaillement déterminé. L'introduction d'un polymère de viscosité dans le fluide qui viscoélastique permet donc de caler la chute de viscosité en fonction de la calibration du jeu 44 et de la sollicitation dynamique autrement dit de la vitesse de déplacement du piston 43 et donc de caler la fréquence propre du fluide viscoélastique sur la bande de fréquence non amorties par les premiers moyens d'amortissement. Il y a toujours plusieurs fréquences de résonance à filtrer. Les deux systèmes d'amortissement permettent d'avoir une liberté de calage des fréquences d'amortissement pour optimiser le système.

Le calage de la chute de viscosité est définie par la détermination d'un point caractéristique (points A, B sur les courbes schématiques présentées en figure 4). Ce point caractéristique se détermine classiquement par un viscosimètre haute température / haut cisaillement, selon une méthode spécifique. La méthode choisie ici est le test standard CEC L-36 A-90, pour une température de 140°C. Un exemple de viscosimètre haute température / haut cisaillement est un viscosimètre capillaire de marque CANNON® (HTHS Series II)

Dans ces conditions de test, de préférence, le point caractéristique de chute de viscosité pour un taux de cisaillement compris entre 10⁴ s⁻¹ et 10⁶ s⁻¹, est choisi compris entre 2 et 10 centipoise.

L'invention permet de protéger les électrovannes pneumatiques des défaillances dues aux vibrations par mise en résonance tout en conservant un temps de réponse suffisamment court pour répondre aux besoins dynamiques de commandes des actionneurs de moteur.

## Revendications

1. Ensemble d'électrovanne destiné à être fixé à un ensemble comprenant un moteur (1), l'ensemble d'électrovanne comprenant :
- une électrovanne (24) pneumatique comprenant un corps (38), une entrée (30) destinée à être reliée à une pression d'alimentation, une sortie (26) destinée à fournir une pression de commande et un actionneur permettant le contrôle de la pression de commande,
- des premiers moyens d'amortissement (39, 39') des vibrations produites par le moteur lors de son fonctionnement, disposés extérieurement au corps (38) de l'électrovanne (24), les premiers moyens d'amortissement (39, 39') étant destinés à relier le corps (38) de l'électrovanne (24) au moteur (1),
**caractérisé en ce que** l'électrovanne (24) comprend des seconds moyens d'amortissement (41, 37) disposés intérieurement au corps (38) de l'électrovanne (24), les premiers et seconds moyens d'amortissement (39, 39') étant conçus de sorte qu'ils forment un dispositif de double découplage des vibrations entre le moteur (1) et l'actionneur.

2. Ensemble d'électrovanne selon la revendication 1, **caractérisé en ce que** les premiers moyens d'amortissement (39, 39') comprennent un matériau élastique (40).

3. Ensemble d'électrovanne selon la revendication 2, **caractérisé en ce que** le matériau élastique (40) présente une raideur (K1) comprise entre 1 kN/mm et 100 kN/mm.

4. Ensemble d'électrovanne selon l'une quelconque des revendications précédentes, **caractérisé en ce que** les seconds moyens de découplage (41) comprennent un cylindre (42), un piston (43) apte à coulisser dans le cylindre (42) et baignant dans un fluide viscoélastique.

5. Ensemble d'électrovanne selon la revendication 4, **caractérisé en ce que** le fluide viscoélastique présente une viscosité cinématique comprise entre 100 centistokes et 1000 centistokes à 20°C et une viscosité cinématique comprise 5 centistokes et 100 centistokes à 130°C.

6. Ensemble d'électrovanne selon la revendication 4 ou la revendication 5, **caractérisé en ce que** le fluide viscoélastique comprend un polymère de viscosité destiné à faire chuter, pour un taux de cisaillement déterminé, la viscosité dynamique du fluide viscoélastique.

7. Ensemble d'électrovanne selon la revendication 6, **caractérisé en ce que** le polymère de viscosité est choisi de sorte que le fluide viscoélastique présente une chute de viscosité dynamique pour un taux de cisaillement compris entre 10⁴ et 10⁶ s⁻¹.

8. Ensemble d'électrovanne selon la revendication 6 ou la revendication 7, **caractérisé en ce que** le cisaillement du fluide viscoélastique est provoqué au niveau d'un jeu (44) de fonctionnement entre le piston (43) et le cylindre (42).

9. Ensemble moteur comprenant un moteur **caractérisé en ce qu'**il comprend un ensemble d'électrovanne selon l'une quelconque des revendications précédentes.

10. Ensemble moteur selon la revendication précédente, **caractérisé en ce qu'**il comprend un turbocompresseur (15) à géométrie variable comprenant des aubes (22) ajustables, l'ensemble d'électrovanne étant destiné à piloter les aubes (22) ajustables.

## Patentansprüche

1. Magnetventilanordnung, die dazu bestimmt ist, an einer Baugruppe befestigt zu werden, die einen Verbrennungsmotor (1) umfasst, wobei die Magnetventilanordnung Folgendes umfasst:
- ein pneumatisches Magnetventil (24), das einen Körper (38), einen Eingang (30), der dazu bestimmt ist, mit einem Versorgungsdruck verbunden zu sein, einen Ausgang (26), der dazu bestimmt ist, einen Steuerdruck zu liefern, und einen Aktuator, der das Steuern des Steuerdrucks erlaubt,
- erste Dämpfmittel (39, 39') der Schwingungen, die von dem Verbrennungsmotor bei seinem Betrieb erzeugt werden, die außerhalb des Körpers (38) des Magnetventils (24) angeordnet sind, wobei die ersten Dämpfmittel (39, 39') dazu bestimmt sind, den Körper (38) des Magnetventils (24) mit dem Verbrennungsmotor (1) zu verbinden,
**dadurch gekennzeichnet, dass** das Magnetventil (24) zweite Dämpfmittel (41, 37) umfasst, die innerhalb des Körpers (38) des Magnetventils (24) angeordnet sind, wobei die ersten und zweiten Dämpfmittel (39, 39') derart ausgelegt sind, dass sie eine Vorrichtung zum doppelten Entkoppeln der Schwingungen zwischen dem Verbrennungsmotor (1) und dem Aktuator bilden.

2. Magnetventilanordnung nach Anspruch 1, **dadurch gekennzeichnet, dass** die ersten Dämpfmittel (39, 39') einen elastischen Werkstoff (40) umfassen.

3. Magnetventilanordnung nach Anspruch 2, **dadurch gekennzeichnet, dass** der elastische Werkstoff (40) eine Steifigkeit (Kl) zwischen 1 kN/mm und 100 kN/mm aufweist.

4. Magnetventilanordnung nach einem der vorhergehenden Ansprüche, **dadurch gekennzeichnet, dass** die zweiten Entkopplungsmittel (41) einen Zylinder (42), einen Kolben (43), der geeignet ist, um in dem Zylinder (42) zu gleiten und in ein viskoelastisches Fluid eingetaucht ist, umfassen.

5. Magnetventilanordnung nach Anspruch 4, **dadurch gekennzeichnet, dass** das viskoelastische Fluid eine kinematische Viskosität zwischen 100 Centistoke und 1000 Centistoke bei 20 °C und eine kinematische Viskosität zwischen 5 Centistoke und 100 Centistoke bei 130 °C aufweist.

6. Magnetventilanordnung nach Anspruch 4 oder Anspruch 5, **dadurch gekennzeichnet, dass** das viskoelastische Fluid ein Viskositätspolymer umfasst, das dazu bestimmt ist, die dynamische Viskosität des viskoelastischen Fluids bei einer bestimmten Scherrate abnehmen zu lassen.

7. Magnetventilanordnung nach Anspruch 6, **dadurch gekennzeichnet, dass** das Viskositätspolymer derart ausgewählt ist, dass das viskoelastische Fluid eine dynamische Viskositätsabnahme für eine Scherrate zwischen 10⁴ und 10⁶.s⁻¹ aufweist.

8. Magnetventilanordnung nach Anspruch 6 oder Anspruch 7, **dadurch gekennzeichnet, dass** das Scheren des viskoelastischen Fluids im Bereich eines Betriebsspiels (44) zwischen dem Kolben (43) und dem Zylinder (42) verursacht wird.

9. Verbrennungsmotoranordnung, die einen Verbrennungsmotor umfasst, **dadurch gekennzeichnet, dass** er eine Magnetventilanordnung nach einem der vorhergehenden Ansprüche umfasst.

10. Verbrennungsmotoranordnung nach dem vorhergehenden Anspruch, **dadurch gekennzeichnet, dass** sie einen Turbolader (15) mit variabler Geometrie umfasst, der einstellbare Schaufeln (22) umfasst, wobei die Magnetventilanordnung dazu bestimmt ist, die einstellbaren Schaufeln (22) zu steuern.

## Claims

1. A solenoid valve assembly intended to be fixed to an assembly including a motor (1), the solenoid valve assembly including:
- a pneumatic solenoid valve (24) including a body (38), an inlet (30) intended to be connected to a supply pressure, an outlet (26) intended to provide a control pressure and an actuator permitting the monitoring of the control pressure,
- first damping means (39, 39') of the vibrations produced by the motor during its operation, disposed externally to the body (38) of the solenoid valve (24), the first damping means (39, 39') being intended to connect the body (38) of the solenoid valve (24) to the motor (1),
**characterized in that** the solenoid valve (24) includes second damping means (41, 37) disposed internally to the body (38) of the solenoid valve (24), the first and second damping means (39, 39') being designed such that they form a dual disconnection device of the vibrations between the motor (1) and the actuator.

2. The solenoid valve assembly according to Claim 1, **characterized in that** the first damping means (39, 39') include an elastic material (40).

3. The solenoid valve assembly according to Claim 2, **characterized in that** the elastic material (40) has a stiffness (Kl) comprised between 1kN/mm and 100 kN/mm.

4. The solenoid valve assembly according to any one of the preceding claims, **characterized in that** the second disconnection means (41) include a cylinder (42), a piston (43) able to slide in the cylinder (42) and bathing in a viscoelastic fluid.

5. The solenoid valve assembly according to Claim 4, **characterized in that** the viscoelastic fluid has a kinematic viscosity comprised between 100 centistokes and 1000 centistokes at 20°C and a kinematic viscosity comprised between 5 centistokes and 100 centistokes at 130°C.

6. The solenoid valve assembly according to Claim 4 or Claim 5, **characterized in that** the viscoelastic fluid includes a viscosity polymer intended to bring down, for a specified shearing rate, the dynamic viscosity of the viscoelastic fluid.

7. The solenoid valve assembly according to Claim 6, **characterized in that** the viscosity polymer is selected such that the viscoelastic fluid has a dynamic drop in viscosity for a shearing rate comprised between 10⁴ and 10⁶ s⁻¹.

8. The solenoid valve assembly according to Claim 6 or Claim 7, **characterized in that** the shearing of the viscoelastic fluid is brought about at the level of an operating clearance (44) between the piston (43) and the cylinder (42).

9. A motor assembly including a motor, **characterized in that** it includes a solenoid valve assembly according to any one of the preceding claims.

10. A motor assembly according to the preceding claim, **characterized in that** it includes a turbocharger (15) of variable geometry including adjustable blades (22), the solenoid valve assembly being intended to drive the adjustable blades (22).
